# EUROPEAN PATENT SPECIFICATION

(11) **EP 0 730 357 B1**
(45) Date of publication and mention of the grant of the patent: **23.10.2002**
(21) Application number: 96850036.3
(22) Date of filing: 23.02.1996
(51) Int. Cl.: H04L 5/06, H04L 27/26

(54) **Frequency and frame synchronisation for OFDM**
Synchronisierung von Frequenz und Rahmen für OFDM
Synchronisation de fréquence et de trame pour MDFO

(30) Priority: 01.03.1995 SE 9500743
(43) Date of publication of application: 04.09.1996
(73) Proprietor: TELIA AB, 123 86 Farsta (SE)
(72) Inventor: Isaksson, Mikael, S-973 42 Lulea (SE); Engström, Bo, S-976 32 Lulea (SE)
(74) Representative: Hopfgarten, Nils

(56) References cited:
- EP-A- 0 608 024
- EP-A- 0 709 980
- WO-A-92/16063
- WO-A-95/03656
- WO-A-96/02990
- LE FLOCH B ET AL: "DIGITAL SOUND BROADCASTING TO MOBILE RECEIVERS" IEEE TRANSACTIONS ON CONSUMER ELECTRONICS, vol. 35, no. 3, 1 August 1989, NEW YORK, US, pages 493-503, XP000065975
- FLAVIO DAFFARA ET AL: "MAXIMUM LIKELIHOOD FREQUENCY DETECTORS FOR ORTHOGONAL MULTICARRIER SYSTEMS" PROCEEDINGS OF THE INTERNATIONAL CONFERENCE ON COMMUNICATIONS (ICC), GENEVA, MAY 23 - 26, 1993, vol. 1 - 2 - 03, 23 May 1993, INSTITUTE OF ELECTRICAL AND ELECTRONICS ENGINEERS, pages 766-771, XP000371188
- VAN DE BEEK J -J ET AL: "Low-complex frame synchronization in OFDM systems" 1995 FOURTH IEEE INTERNATIONAL CONFERENCE ON UNIVERSAL PERSONAL COMMUNICATIONS. RECORD. GATEWAY TO THE 21ST CENTURY (CAT. NO.95TH8128), PROCEEDINGS OF ICUPC 95 - 4TH IEEE INTERNATIONAL CONFERENCE ON UNIVERSAL PERSONAL COMMUNICATIONS, TOKYO, JAPAN, 6 - 11 November 1995, ISBN 0-7803-2955-4, 1995, NEW YORK, NY, USA, IEEE, USA, pages 982-986, XP002055231

## Description

### TECHNICAL FIELD

The present invention relates to a system where information is transmitted in orthogonal channels. The information is transmitted in a number of channels. OFDM, Orthogonal Frequency Division Multiplexing, is a transmission method suitable for time dispersive channels. At the present situation OFDM is planned to be used as tranmission method at a large scale within digital sound broadcasting, for instance DAB, HD-TV, high-capacity services on copper cable, DTM line coding which basically is the same thing as OFDM etc. More precisely the present invention relates to a method and a device according to the preambles of claims 1 and 5 respectively.

### PRIOR ART

A method and a device of the above mentioned kind are previously known from WO 95/03656.

In the systems which at present are used for synchronization in OFDM-systems a number of multipliers are required. Each multiplier is comparatively expensive, so a minimization of the number of multipliers at the synchronization functions is desirable.

OFDM is implemented among other things as OFDM with guard space, respective OFDM with pulse forming. In OFDM with guard space a part of the signal interval is detailed for said guard space. In guard space a part of the symbol is repeated. At OFDM with pulse forming the symbols are being pulse formed, which means that the side lobes from each symbol, in the frequency plane, can be suppressed which gives a more reliable detection when perfect synchronization can not be guaranteed. This means that one repeats the whole, or a part of the symbol and then multiplies it with the pulse form.

In the document WO 93/20627 a method and a device is shown which is intended to be used in a digital transmission system. The invention makes use of repetitive synchronization patterns which can be arranged in transmitted data or placed in time slots of their own. The synchronization information is cross correlated with a known value at which the synchronization signal is created by summing up the result from the cross correlation.

In the document US 3 883 729 is described a device for frame correlation in a time multiplexed transmission system. The device consists of logical circuits for correlation of an incoming signal with a signal which has been delayed. By that the correlation can be performed on just any signals provided they are repeated.

In the document US 5 363 415 is described a "carrying regenerating device" intended for mobile satellite communication. According to the document unique signal sequences are placed periodically among transmitted data. By the cross correlation with known stored sequences, phase- and frequency errors can be calculated.

In document US 4 638 478 synchronization of frames in a TDM-system is described. The synchronization uses circuits which detect guard space. This information is used to secure correct frame synchronization.

The document WO 93/11616 describes a digital transmission process which utilizes OFDM. According to the described process the protection slots are utilized for the transfer of data.

In the document US 4 598 413 a circuit arrangement for frame- and phase synchronization of a local sampling clock is described. The synchronization is performed by cross correlation of a received, unique synchronization sequence and one in the receiver stored known sequence.

In the document EP 608024 synchronization of an OFDM-receiver is described. A received sequence is correlated with a sequence which is delayed one block length.

In the document US 5 148 451 a device for carrier regain in a mobile satellite communications system is described. Unique synchronization words are placed periodically in the transmitted signal. A cross correlation circuit calculates the cross correlation between the received signal and a known stored sequence.

Consequently it is previously known to perform cross correlation of an incoming signal with a locally stored signal. It is also known to utilize a delayed signal where signals exist at certain places in the protocol intended for synchronization. Further the documents show that it is previously known to partially utilize the guard spaces for synchronization.

### DESCRIPTION OF THE INVENTION

### Technical problem

Simple methods to control time- and frequency errors at OFDM-transmission exist. In the known methods which are used at present there exists a data dependence. Further, known methods require that a number of multiplexings of the signal is performed. For each multiplexing a multiplier is required which is comparatively expensive. There is a desire to reduce the number of multipliers to reduce the costs for the synchronization function.

In the known methods, further, special synchronization blocks or synchronization signals are used. The utilization of synchronization blocks or synchronization signals reduces the available space in the signal. In order to effectively utilize the available space it is therefore desirable to find methods where special synchronization blocks or synchronization signals have been excluded.

The synchronization methods shall further be independent of existing standards and be produced in different connections for OFDM-system.

The aim of the present invention is to solve the above mentioned problems.

### THE SOLUTION

The above aim is obtained by a method and a device according to claims 1 and 5 respectively.

Thus, the present invention relates to a method for synchronization of OFDM-systems. An analog signal is digitized in an A/D-converter. The digitized signal is transmitted on a number of channels. The signal is read into a synchronization block. From the synchronization signal the synchronization block determines the position of a frame clock. From the synchronization block a frame clock signal is transmitted to an FFT-block and a frequency control signal to an oscillator. The synchronization of the system is performed before FFT is performed on the signal.

According to the invention the signal includes a symbol and a repeated part of the symbol in the space provided for the signal. The signal is cross correlated at which the repeated part of the signal is given a positive contribution. The cross correlation is calculated by multiplication and sliding mean value forming.

The repeated part of the signal is complex conjugated and multiplied with corresponding part in the signal at which a second signal is created. The second signal is shifted a number of samples corresponding to the repeated part of the signal. The result is subtracted from the second signal and a third signal is created which is integrated and a filtered cross correlation sequence is obtained. The absolute value of the third signal is determined. A triangular signal is obtained which is used for generation of a frame clock by utilizing the peak values of the third signal. The frequency error in the system is determined by calculation of the phase of the cross correlation when the cross correlation has its maximum. The phase shift of the cross correlation is proportional to the length of the symbol.

The invention further relates to a device for synchronization in OFDM-system. A synchronization device is arranged to receive a signal, which signal is digitized and divided into a number of channels. Correlation of the signal is performed by the synchronization device. A synchronization signal is transmitted and the synchronization is performed before the FFT-function. The synchronization device is arranged to transmit a frame clock signal to an FFT-processor. The synchronization device further transmits a frequency signal to an oscillator at which the frequency is adjusted. The signal includes a symbol, L. The symbol is repeated at least to a part in the signal. The repeated signal is preferably placed after the symbol within the signal. The repeated signal is complex conjugated whereafter a multiplication with the corresponding part in the symbol, L, is performed in a multiplying device. A device for forming sliding mean value is arranged to produce synchronization signals from the signal obtained from the multiplication device. The device for forming sliding mean value includes a shift device which is arranged to shift the signal a number of steps corresponding to the length of the repeated signal. The result is subtracted from the original signal. The obtained signal is integrated in an integrating device. The synchronization device is arranged to calculate the absolute value of the signal. A signal including a sequence of triangular signals is produced. The signal generates a frame clock signal to the FFT-processor. The frequency error is determined in the synchronization device by determining the phase shift of the cross correlation. The phase shift is proportional to the frequency error. The frequency error is preferably measured at correlation maxima.

### DESCRIPTION OF FIGURES

Figure 1 shows the construction of the invention in the form of a block diagram.
Figure 2 shows the construction of the signal at utilizing of guard space.
Figure 3 shows the construction of the signal at utilizing of pulse forming.
Figure 4 shows synchronization at utilization of guard space.
Figure 5 shows synchronization at utilization of pulse forming.
Figure 6 shows a sliding mean filter.
Figure 7 is a detailed picture of forming sliding mean value in the case with guard interval.
Figure 8 shows the formation of sliding mean value in the case with pulse forming.
Figure 9 shows a sliding cross correlation sequece.
Figure 10 shows the implementation of the synchronization method.
Figure 11 shows the absolute values of cross correlation sequences over six signal intervals for the case OFDM with guard space.
Figure 12 shows a filtered signal in the plane of complex numbers for the case OFDM with guard space.
Figure 13 shows phase variation within a signal interval for the case OFDM with guard interval.
Figure 14 shows the absolute value within a signal interval for the case OFDM with guard interval.
Figure 15 shows the absolute value of a filtered signal for the case OFDM with pulse forming.
Figure 16 shows a filtered signal in the plane of complex numbers for the case OFDM with pulse forming.
Figure 17 shows the phase variations for seven signal intervals for the case OFDM with pulse forming.

### DETAILED EMBODIMENT

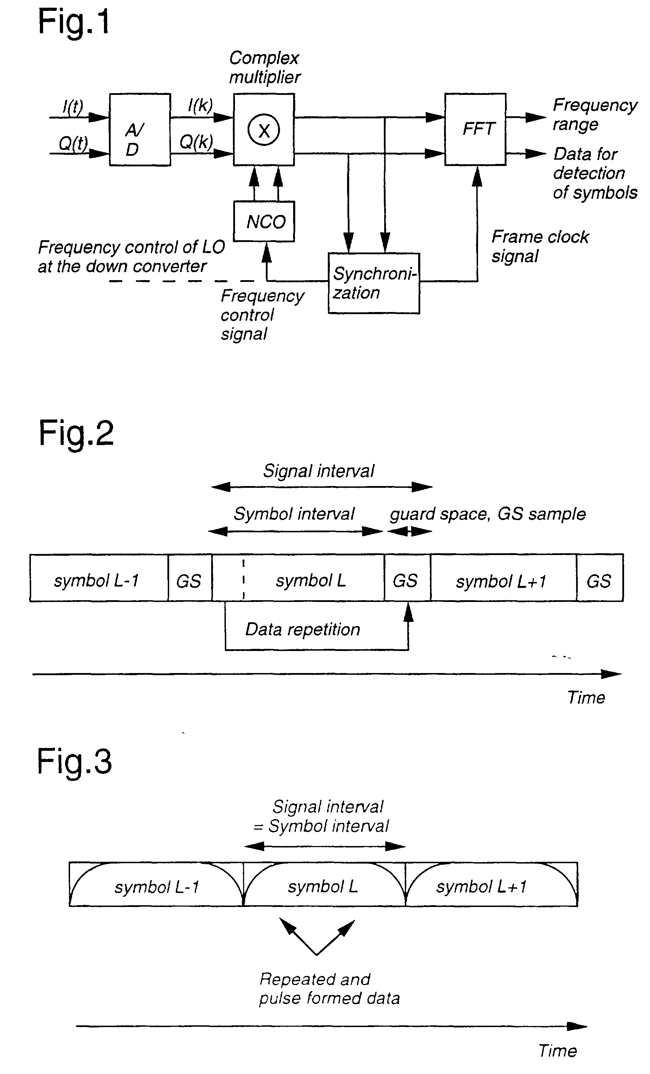

In OFDM-systems a digital signal is converted in an A/D-converter from analog signal to digital signal. The digital signal is divided into a number of, preferably narrow-band, channels. The digital signal is read into the synchronization block in the time domain, i.e. within fourier transforming of the signal via the FFT-processor according to Figure 1. FFT in this case means Fast Fourier Transform which is described in detail in other literature. In the synchronization block the frame clock is regained for start of the input of data to the FFT-processor. For OFDM-reception it is of outmost importance that this input starts at the right point of time to make possible detection of data. The input point of time to the FFT-processor is therefore adjusted in relation to the regained frame clock.

When the frame clock has been regained the frequency error can be estimated which is also performed in the synchronization block. The frequency error is utilized for a control loop for feedback to an NCO, Numerically Controlled Oscillator, which generates a complex rotating vector which is multiplied by the input signal for compensation of the frequency error. An alternative to this digital control is to control the local oscillators which are utilized for mixing down from radio frequency (the RF-parts are excluded in the Figure). The described synchronization method is focused on the estimation of frame clock and frequency error. To use these parameters control mechanisms type Phase Lock Loop (PLL) are required, which is required in all types of synchronization methods. The method utilizes that a sufficient part of the information in the OFDM-signal is repeated during each signal interval. This condition is fulfilled in most cases where OFDM is utilized. In the following two main cases it is described where this condition is fulfilled:
- OFDM-structure where so called guard space (guard interval) consisting of a repeated cyclical data is utilized.
- OFDM-structure with pulse forming.

In most existing systems based on OFDM, guard space between the symbols are used, see Figure 2. Guard space has as its task to absorb the time dispersion between two following symbols, and to allow delays between a number of audible transmitters (simulcast network). If a 1024 points FFT is utilized, the symbols are sampled 1024 times. The number of samples for guard space can be between zero and a fourth of the FFT-length. Guard space is filled in the time domain with repeated data, i.e. the first part of the symbol. Because the FFT-operation is cyclic, this causes that the starting point of time for sampling of symbols can vary within guard space without any information being lost.

There are further variants of OFDM which utilize pulse forming of the symbols. Pulse forming means that the side lobes from each symbol, in the frequency plane, can be suppressed which gives a more reliable detection when perfect synchronization can not be guaranteed.

In the practise this means that one repeats the whole or a part of the symbol and then multiplies it by the pulse form.

In Figure 3 the signal interval at utilization of pulse forming is shown. Between two symbols the transition is made "soft" via pulse forming which results in suppressing of side lobes. Henceforth the symbols are however drawn as rectangles for the sake of simplicity.

The main characteristic of pulse forming for this synchronization method is that one utilizes data which are repeated during the signal interval in the transmitted signal.

The synchronization method is based on time continuous correlation of samples, time separated by the repeating distance N. The cross correlation means that during the part of the signal interval which is repeated (correlated), data is given positive contibution. The cross correlation is calculated by multiplication and formation of sliding mean value.

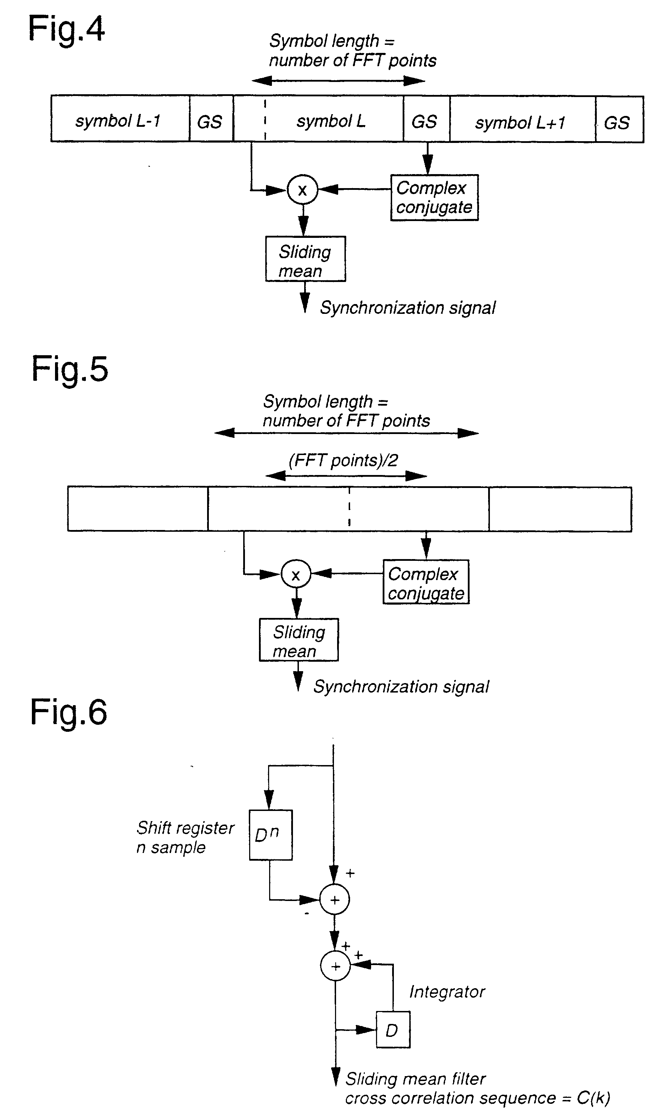

In Figure 4 this is illustrated by the length of a symbol being equal to the number of FFT-points. In Figure 4 it has been symbolized that a part of the beginning of the symbol L has been repeated in guard space, GS. The repeated signal in guard space, GS, is complex conjugated and multiplied by corresponding part in the original symbol L. The mean value of the result is created and produces a synchronization signal.

In Figure 5 is shown the system at pulse forming. In this case the symbol length consists of the number of FFT-points. In this case half the symbol length is utilized for the symbol and half the symbol length for the repeated function. This means that the same information is repeated in its whole within the symbol length. The repeated symbol is complex conjugated and multiplied by the original signal. The mean value of the result is created and a synchronization signal is transmitted for control of the FFT-block.

The principle for forming sliding mean value is shown i Figure 6. The output signal from the sliding mean filter is written as C(k) and is equal to the sum from k equal to minus infinity to plus infinity. 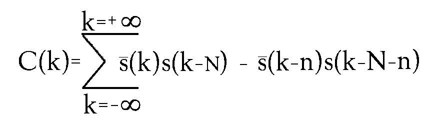 where $\overline{\text{s}}$ = complex conjugate of the repeated part, s (k) is the sampled complex OFDM-signal, N is the repeating distance, and n is the number of samples which is included in the sliding mean value. In the case with guard space, N is equal to the number of FFT-points, and n is equal to the number of samples in guard space. In the case with pulse forming N is the number of FFT-points/two, and n is equal to N.

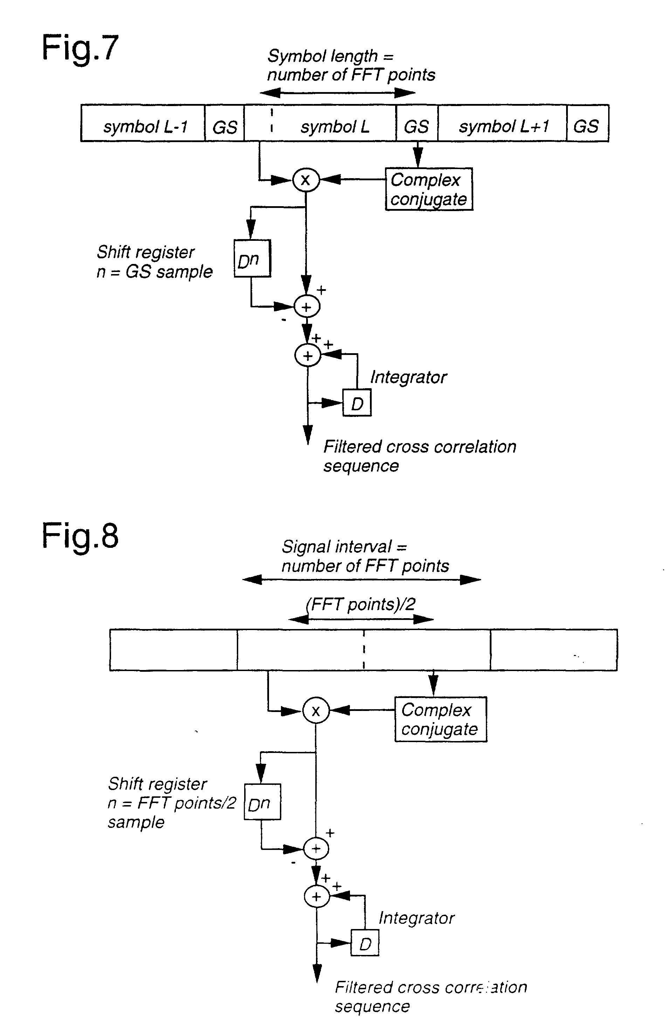

Synchronization models completed with method for forming sliding mean value are shown in Figure 7 and 8 for the two cases.

The product obtained by the multiplication of the complex conjugated signal and the original signal according to Figure 4 and 5 are read into the shift register in Figure 6. In the shift register the signal is shifted n times. The obtained signal is subtracted from the unshifted signal. The signal which has been obtained in this way is added to a signal which is shifted one step. In this way an integration of the signal is achieved. The result which after that is obtained is a filtered sliding mean value cross correlation sequence equal to C(k). In the Figures 7 and 8 the whole process is shown by compilation of the Figures 4 and 6, respective 5 and 6,

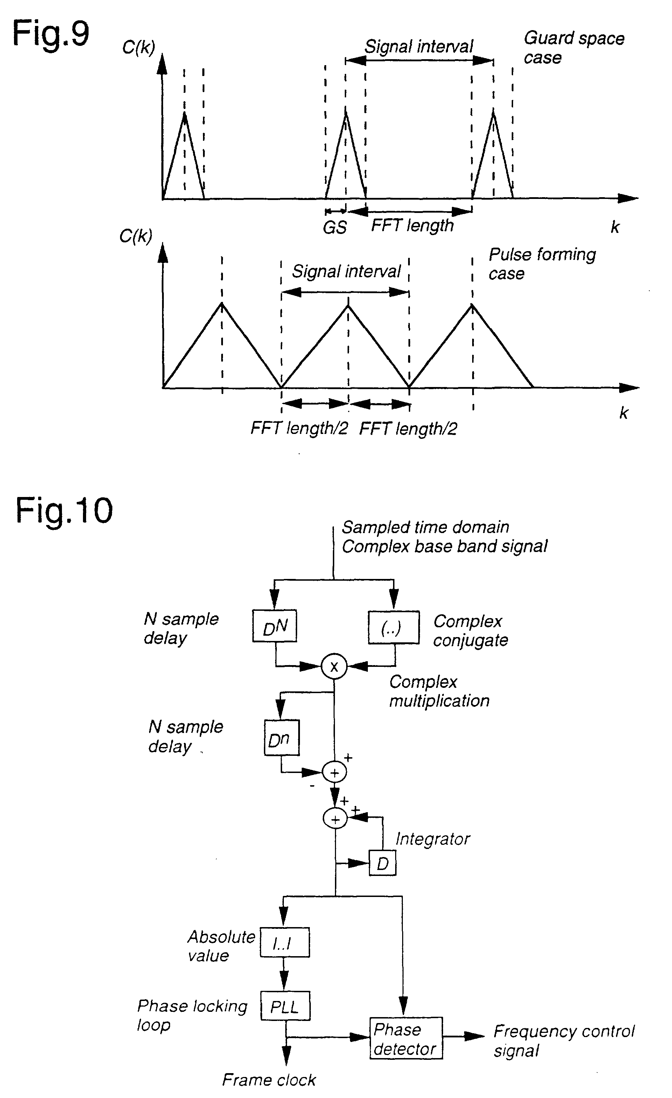

In Figure 9 the absolute value of the output signal, C(k), for both variants are shown.

It is important to take the absolute value of C(k), since a frequency error can result in that the signal can be phase shifted which makes C(k) not real.

Filtering of an absolute value calculation gives a triangular signal according to Figure 9 which is very suitable to feed to a Phase Lock Loop (PLL) for generation of a frame clock to the following FFT-processor.

The frequency error can easily be calculated from the cross correlation by calculating the phase where the cross correlation has its maximum, as is shown below. Received signal, s'(k) with frequency error can be expressed as${\text{s'(k)=e}}^{\text{jωk}} \text{. s(k)}$ where ω is the frequency error. At the cross correlation the following occurs:${\text{C(k) = e}}^{\text{jωk}} {\text{. s(k)e}}^{\text{jω(N-k)}} \text{. s(k)} \overline{\text{s}} \text{(k-N)}$ which is simplified to${\text{C(k) = e}}^{\text{jωN}} \text{. s(k)} \overline{\text{s}} \text{(k-N)}$ Notice that the time dependence, k, has disappeared from the expression. Consequently the phase shift of the cross correlation is directly proportional to the frequency error ω multiplied by the time distance N. The greater the repeating distance N, the greater the phase shift due to the frequency error, which means that the maximal frequency error which can be detected is:$\text{|Nω| < Π rad.}$ Or that the frequency error must satisfy:$\left|{\text{f}}_{\text{e}}\right| {\text{< f}}_{\text{s}} \text{/(2N)}$ where fₑ is the frequency error in Hz, and fₛ is the sampling frequency in Hz.

The frequency error can, in principle, be measured at any time within the repeating interval, but to obtain a more reliable estimation this should be done at cross correlation maxima since the phase in that point is based on the mean value of a large number of samples.

A realization model for the synchronization is shown in Figure 10. The sampled complex OFDM-signal is split into two branches. In one branch the sample of the signal N (repeating distance) is delayed in a shift register. The shift register is most easily implemented with FIFO-memories or double gate RAM-memories. The other branch of the signal is complex conjugated. i.e. the imaginary part changes symbol. The two branches are after that multiplied making a complex multiplier.

The output signal from the multiplier is again split into two branches one branch of which is delayed n samples (the number of sample in the sliding mean) in a shift register. The frame clock is regained from the absolute value of the filtered signal at which the function is performed before the Phase Lock Loop PLL-block. There are different ways of simplifying the calculation of the absolute value to avoid further multiplications. A sufficiently good approximation is:$\text{aBS(Z) ≈ max (abs(I), abs(Q) + 1/2 times min (abs(I), abs (Q))}$ where$\text{Z = I+i.Q (complex notation).}$

The block "Phase Lock Loop" regains the frame clock, i.e. generates control signal to the FFT-process where it shall start the sampling of the OFDM-symbol. The block "Phase Detector" has the task to calculate the phase of the correlation sequence at correlation maxima (synchronous with the frame clock). The block "Peak Detector" is consequently triggered directly on the frame clock and calculates the phase at this point of time. The phase is at that time directly proportional to the frequency error.

Phase detection shall only be performed once in each signal interval. It is however important that it is performed at the point of time for correlation maxima, since maximal precision of the phase is given at this point of time. Phase detection can be performed in different ways, for instance by a Pythagoreian processor, look-up table in EPROM, or by a signal processor.

The phase (the frequency error) operates as input signal to a simple feed-back-loop for control of the frequency.

One of the greatest advantages of the present method is the slight complexity which is required by the hardware at the implementation. In the concept is only included:
- one complex multiplier
- two complex adders
- two shift registers
- one phase detector
- logic for calculation of approximized absolute value (compare cell logic and a proper adder)
- logic for PLL (which is included in all synchronization methods)

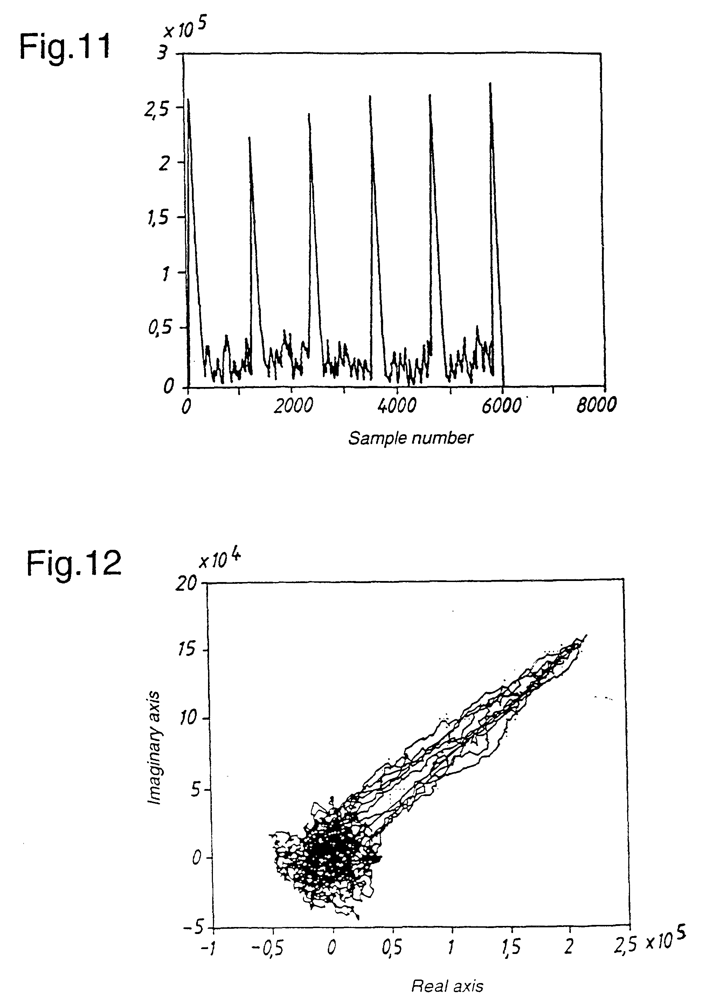

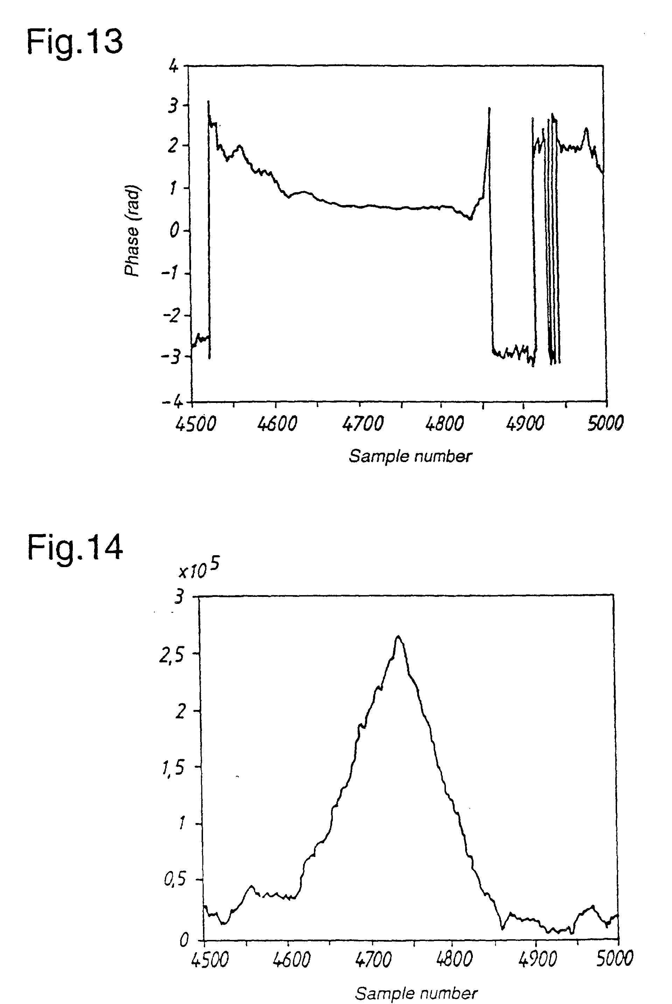

In Figure 11 the absolute value of a filtered signal is shown. The signal also includes a positive frequency error which is not evident from the absolute value. The Figure shows the result at synchronization of OFDM which contains guard space where the number of FFT-points are 1024 and the number of samples in guard space is 128, and the modulation method QPSK has been utilized. In Figure 12 is shown the filtered signal in the complex number plane for the case OFDM with guard space. If the eight signal intervals in the complex number plane are studied the phase shift due to the frequency error of the signal will be evident. In Figures 13 and 14 is shown a blow-up of an interval containing a cross correlation maximum. From Figure 13 can be seen how the phase is integrated up to the point where the filtered signal has a maximum. The phase detection shall be performed at this point of time to give maximal precision and reliability. Note that the time scale is identical in Figures 13 and 14.

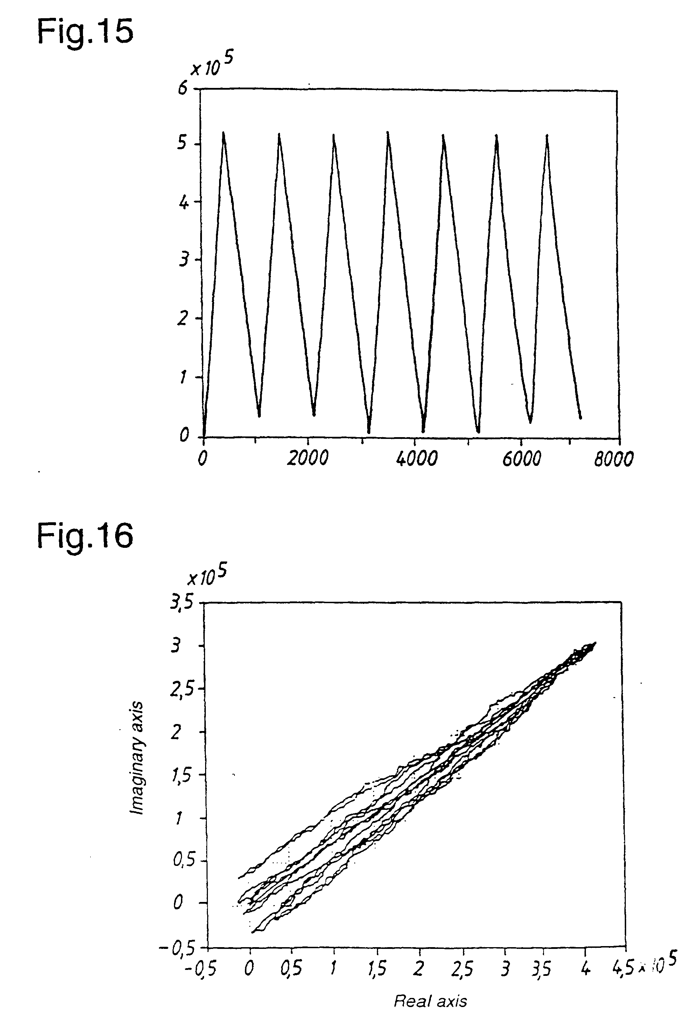

At synchronization of pulse forms OFDM the absolute value of a filtered signal is shown in Figure 15. In this case a 1024 points FFT with the modulation method QPSK has been utilized. Figure 11 shows the absolute value of the filtered signal over seven signal intervals. The signal also contains a positive frequency error which can not be seen in the absolute value. If the seven signal intervals are studied in the complex number, see Figure 16, the phase shift due to the frequency error by which the signal is influenced will be evident. By a comparison with the guard space case it will be evident that the phase, in principle, is constant within the signal interval. However, maximal precision is obtained in correlation maxima.

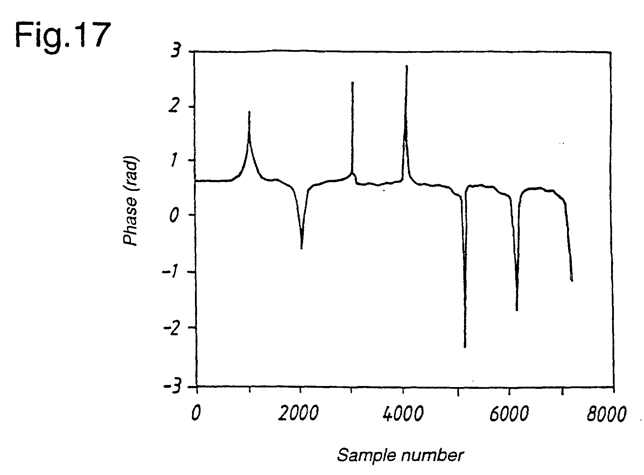

In Figure 17 the phase shift over the seven signal intervals is shown.

The invention is not restricted to what has been described above, but can be subject to modifications within the frame of the claims.

## Claims

1. Method for synchronization in Orthogonal Frequency Division Multiplexing, OFDM, systems, wherein a digitized signal is read into a synchronization block, which from said signal regains a clock for start of signal data input to a Fast Fourier Transform, FFT, block and transmits a clock signal to said FFT-block and a frequency control signal to an oscillator to synchronize the system before FFT is performed on the signal, **characterized in that** the signal includes a symbol and a repeated part of the symbol, **in that** the repeated part of the symbol is complex conjugated and multiplied by a part of the original symbol corresponding to said repeated part of the symbol to create a second signal, which is delayed a number of samples corresponding to the number of samples in the repeated part of the signal and subtracted from the undelayed second signal to create a third signal, which is integrated, and **in that** the absolute value of the third signal is determined to obtain a triangular signal, which is utilized for generation of the clock by utilization of the peak values of the third signal.

2. Method according to claim 1, **characterized in that** the phase of the triangular signal is calculated when said triangular signal has its maximum.

3. Method according to claims 1 or 2, **characterized in that** the phase shift of said triangular signal is determined.

4. Method according to any of the preceding claims, **characterized in that** a frequency error is measured at maximum value of said triangular signal.

5. Device for synchronization in Orthogonal Frequency Division Multiplexing, OFDM, systems, comprising a synchronization means arranged to generate a synchronizing clock signal for a Fast Fourier Transform, FFT, processor, said synchronization means being adapted to receive a digitized signal including a symbol, **characterized in that** said synchronization means comprises a repeating means for repeating said symbol to at least a part and performing complex conjugation of said symbol part, a multiplication means provided for multiplication of said complex conjugated symbol with a part of the original symbol corresponding to said repeated part of the symbol to create a second signal, a shift means arranged to delay said second signal a number of samples corresponding to the number of samples in the repeated part of the symbol, a subtraction means for subtracting said delayed second signal from the undelayed second signal to create a third signal, an integration means for integrating said third signal and calculating the absolute value of it to produce a triangular signal, and a means provided to generate from peak values of said triangular signal the clock signal for the FFT processor.

6. Device according to claim 5, **characterized in that** said repeating means is adapted to place said repeated symbol part after the symbol itself in said digitized signal.

7. Device according to claims 5 or 6, **characterized in that** the synchronization device is arranged to transmit a frequency signal to an oscillator.

## Patentansprüche

1. Verfahren zur Synchronisation in orthogonalen Frequenzmultiplex (OFDM) - Systemen, bei welchem ein digitalisiertes Signal in einen Synchronisationsblock eingelesen wird, welcher aus diesem Signal einen Takt zum Starten der Signaldateneingabe in einen Schnelle-Fourier-Transformations (FFT) - Block wiedergewinnt und ein Taktsignal zu diesem FFT-Block überträgt sowie ein Frequenz-Steuersignal zu einem Oszillator, um das System zu synchronisieren, bevor FFT auf das Signal angewandt wird, **dadurch gekennzeichnet, dass** das Signal ein Symbol und einen wiederholten Teil des Symbols enthält, dass der wiederholte Teil des Symbols komplex konjugiert und mit einem Teil des ursprünglichen Symbols multipliziert wird, der dem wiederholten Teil des Symbols entspricht, um ein zweites Signal zu erzeugen, welches um eine Anzahl von Abtastwerten, die der Anzahl von Abtastwerten in dem wiederholten Teil des Signals entspricht, verzögert und subtrahiert wird von dem unverzögerten zweiten Signal, um ein drittes Signal zu erzeugen, das integriert wird, und dass der betragliche Wert des dritten Signals bestimmt wird, um ein dreieckiges Signal zu erhalten, welches benutzt wird zur Generierung des Takts durch Benutzung der Spitzenwerte des dritten Signals.

2. Verfahren nach Anspruch 1, **dadurch gekennzeichnet, dass** die Phase des dreieckigen Signals berechnet wird, wenn das dreieckige Signal sein Maximum hat.

3. Verfahren nach den Ansprüchen 1 oder 2, **dadurch gekennzeichnet, dass** die Phasenverschiebung des dreieckigen Signals bestimmt wird.

4. Verfahren nach einem der vorangehenden Ansprüche, **dadurch gekennzeichnet, dass** ein Frequenzfehler gemessen wird beim Maximalwert des dreieckigen Signals.

5. Vorrichtung zur Synchronisation in orthogonalen Frequenzmultiplex (OFDM) - Systemen, umfassend ein Synchronisationsmittel, das zum Generieren eines Synchronisationstaktsignals für einen Schnelle-Fourier-Transformations (FFT) - Prozessor eingerichtet ist, welches Synchronisationsmittel ausgebildet ist zum Empfangen eines digitalisierten Signals, das ein Symbol enthält, **dadurch gekennzeichnet, dass** das Synchronisationsmittel ein Wiederholungsmittel umfasst zum Wiederholen des Symbols zumindest zu einem Teil und zum Durchführen einer komplexen Konjugation dieses Symbolteils, ein Multiplikationsmittel, welches vorgesehen ist zur Multiplikation dieses komplex konjugierten Symbols mit einem Teil des ursprünglichen Symbols, der dem wiederholten Teil des Symbols entspricht, um ein zweites Signal zu erzeugen, ein Schiebemittel, welches eingerichtet ist, das zweite Signal um eine Anzahl von Abtastwerten zu verzögern, die der Anzahl der Abtastwerte in dem wiederholten. Teil des Symbols entspricht, ein Subtraktionsmittel zur Subtraktion des verzögerten zweiten Signals von dem unverzögerten zweiten Signal, um ein drittes Signal zu erzeugen, ein Integrationsmittel zum Integrieren des dritten Signals und Berechnen seines betraglichen Werts, um ein dreieckiges Signal zu erzeugen, und ein Mittel, welches vorgesehen ist zum Generieren des Taktsignals für den FFT-Prozessor aus den Spitzenwerten des dreieckigen Signals.

6. Vorrichtung nach Anspruch 5, **dadurch gekennzeichnet, dass** das Wiederholungsmittel dazu ausgebildet ist, in dem digitalisierten Signal den wiederholten Symbolteil nach dem Symbol selbst anzuordnen.

7. Vorrichtung nach den Ansprüchen 5 oder 6, **dadurch gekennzeichnet, dass** die Synchronisationsvorrichtung dazu eingerichtet ist, ein Frequenzsignal zu einem Oszillator zu übertragen.

## Revendications

1. Procédé de synchronisation dans des systèmes de multiplexage à division de fréquence orthogonale MDFO, dans lequel un signal numérisé est entré dans un bloc de synchronisation qui récupère, à partir du dit signal, une horloge de démarrage d'une entrée de données de signal dans un bloc de transformation de Fourier rapide TFR, et qui transmet un signal d'horloge au dit bloc TFR et un signal de commande de fréquence à un oscillateur pour synchroniser le système avant que l'opération TFR soit effectuée sur le signal, **caractérisée en ce que** le signal comprend un symbole et une partie répétée du symbole, **en ce que** la partie répétée du symbole est soumise à une conjugaison complexe et à une multiplication par une partie du symbole d'origine correspondant à la dite partie répétée du symbole pour créer un deuxième signal qui est retardé d'un nombre d'échantillons correspondant au nombre d'échantillons dans la partie répétée du signal et soustrait du deuxième signal non retardé pour créer un troisième signal, qui est intégré, et **en ce que** la valeur absolue du troisième signal est déterminée pour obtenir un signal triangulaire qui est utilisé pour la génération de l'horloge par utilisation des valeurs de crête du troisième signal.

2. Procédé selon la revendication 1, **caractérisé en ce que** la phase du signal triangulaire est calculée lorsque le dit signal triangulaire présente sa valeur maximale.

3. Procédé selon la revendication 1 ou 2, **caractérisé en ce qu'**on détermine le déphasage du dit signal triangulaire.

4. Procédé selon une quelconque des revendications précédentes, **caractérisé en ce qu'**on mesure une erreur de fréquence à une valeur maximale du dit signal triangulaire.

5. Dispositif de synchronisation dans des systèmes de multiplexage à division de fréquence orthogonale MDFO, comprenant un moyen de synchronisation prévu pour engendrer un signal d'horloge de synchronisation pour un processeur de transformation de Fourier rapide TFR, le dit moyen de synchronisation étant adapté à la réception d'un signal numérisé incluant un symbole, **caractérisé en ce que** le dit moyen de synchronisation comprend un moyen de répétition pour répéter le dit symbole au moins en partie et effectuer une conjugaison complexe de la dite partie de symbole, un moyen de multiplication prévu pour multiplier le dit symbole conjugué complexe avec une partie du symbole d'origine correspondant à la dite partie répétée du symbole afin de créer un deuxième signal, un moyen de décalage prévu pour retarder le dit deuxième signal d'un nombre d'échantillons correspondant au nombre d'échantillons dans la partie répétée du symbole, un moyen de soustraction pour soustraire le dit deuxième signal retardé du deuxième signal non retardé afin de créer un troisième signal, un moyen d'intégration pour intégrer le dit troisième signal et calculer sa valeur absolue afin de produire un signal triangulaire, et un moyen prévu pour engendrer, à partir des valeurs de crête du dit signal triangulaire, le signal d'horloge pour le processeur TFR.

6. Dispositif selon la revendication 5, **caractérisé en ce que** le dit moyen de répétition est prévu pour placer la dite partie de symbole répétée après le symbole lui-même dans le dit signal numérisé.

7. Dispositif selon la revendication 5 ou 6, **caractérisé en ce que** le dispositif de synchronisation est prévu pour transmettre un signal de fréquence à un oscillateur.
